# EUROPÄISCHE PATENTSCHRIFT

(11) **EP 0 569 093 B1**
(45) Veröffentlichungstag und Bekanntmachung des Hinweises auf die Patenterteilung: **25.06.1997**
(21) Anmeldenummer: 93201258.6
(22) Anmeldetag: 04.05.1993
(51) Int. Cl.: B23K 37/053, B23K 9/035

(54) **Rohrverbindung sowie Schweisshülse für eine solche Rohrverbindung**
Pipe connection and weld support ring for such a connection
Assemblage de tubes et anneau de support de soudure pour un tel assemblage

(30) Priorität: 07.05.1992 DE 4214492; 09.06.1992 NL 9201006
(43) Veröffentlichungstag der Anmeldung: 10.11.1993
(73) Patentinhaber: HMC H. MEYER & CO. SPEZIALSTAHL GmbH, W-4000 Düsseldorf (DE); Hoogovens Staal B.V., NL-1970 CA IJmuiden (NL)
(72) Erfinder: Horn, Joachim, W-4157 Willich 4 (DE); Slings, Jan, NL-1723 KV Noord-Scharwoude (NL)
(74) Vertreter: Van Breda, Jacobus, Mr. Ir.

(56) Entgegenhaltungen:
- DE-U- 8 701 121
- US-A- 2 188 925
- US-A- 2 796 843
- US-A- 2 847 958
- US-A- 4 285 458
- US-A- 5 110 031
- PATENT ABSTRACTS OF JAPAN vol. 10, no. 171 (M-489)(2227) 17. Juni 1986 & JP-A-6120 676 ( HITACHI SEISAKUSHO K.K. ) 29 Januar 1986

## Beschreibung

Die Erfindung betrifft eine Rohrverbindung, bei der einen Durchgangskanal aufweisende Werkstücke, z. B. Rohre, Rohrkrümmer, Verteilerstücke oder dergleichen, über eine Schweißnaht miteinander verbunden sind, wobei an der Innenseite der Werkstücke im Bereich der Schweißnaht eine Schweißhülse als fester Bestandteil der Rohrverbindung angebracht ist. Die Erfindung betrifft ferner eine Schweißhülse für die Verwendung als fester Bestandteil in einer Rohrverbindung.

Eine solche Rohrverbindung und eine dafür geeignete Schweißhülse ist in der DE-U-87 0̸1 121.2 offenbart. Für die Herstellung der bekannten Rohrverbindung werden die zu verschweißenden Rohrenden um einen Winkel zur Mittelachse der Rohre aufgeweitet. Die Rohrenden werden dann über eine Schweißhülse geschoben, deren Außenmantel aus zwei mit ihren stumpfen Enden aneinanderstoßenden Konen mit einer der Aufweitung der Rohrenden entsprechenden Neigung gebildet ist. Der freie Innendurchmesser der Schweißhülse ist zumindest so groß wie der der zu verbindenden Rohre in den Bereichen außerhalb der Aufweitungen, so daß die Schweißhülse keine Einschnürung verursacht.

Obwohl bei Verwendung einer solchen Schweißhülse der Schweißvorgang vereinfacht wird, weil die Rohrenden in Position gehalten werden und bei richtiger Schweißführung vermieden wird, daß die Schweißnaht nach innen durchbricht, ist die bekannte Lösung nicht frei von Mängeln. Sofern für den Schweißring normaler Stahl verwendet wird, besteht nämlich beim Verschweißen die erhebliche Gefahr des Verzunderns an der Innenseite des Schweißrings. Insbesondere dann, wenn die Rohrverbindung für empfindliche Hydraulikanlagen bestimmt ist, besteht die Notwendigkeit, die Verzunderungsrückstände durch Abbeizen zu entfernen. Dies bedarf großer Sorgfalt. Die dabei anfallenden Rückstände sind umweltunfreundlich. Ihre Entsorgung ist auf Grund gesetzlicher Vorschriften mit erheblichen Kosten verbunden. Insoweit kann durch die Verwendung von Edelstahlschweißringen Abhilfe geschaffen werden. Dies setzt jedoch voraus, daß ein Spezialschweißzusatz verwendet wird, der nicht immer zur Hand ist. Dies ist umständlich und verursacht zusätzliche Kosten.

Ein weiteres Problem besteht darin, daß die Dauerhaltbarkeit der Rohrverbindung nicht befriedigt, insbesondere wenn Wechselbelastungen auftreten, beispielsweise wenn die Rohrverbindung in Hydraulikleitungssystemen häufigen Druckschwankungen ausgesetzt ist. Dies beruht offenbar darauf, daß die Schweißnaht bis in die Schweißhülse hineinreicht und daß von den Grenzflächen zwischen Schweißhülse, Schweißnaht und Rohrenden Risse ausgehen können, die die Rohrverbindung schwächen und bei weiterer Belastung zu vorzeitigem Bruch führen können.

Daneben sind Schweißringe für die Verbindung von Rohrenden bekannt, die lediglich für den Schweißvorgang selbst in den Bereich der Rohrverbindung eingesetzt und nach dem Schweißvorgang wieder entfernt werden (JP-A-61-20̸676; US-A-2 188 925; US-A-2 847 859). Sie bestehen aus im wesentlichen nichtmetallischem, insbesondere Keramik- oder Feuerfestmaterial, beispielsweise SiC, Al₂O₃, Si₃N₄, Graphit, Bauxit oder dergleichen, und sind teilweise mit synthetischen Harzen als Bindern versehen. Solche Schweißringe sollen an der Innenseite der Rohrverbindung für eine glatte Oberfläche sorgen, so daß eine Nachbehandlung nicht notwendig ist. Die rückstandsfreie Entfernung solcher Schweißringe bereitet jedoch erhebliche Schwierigkeiten, insbesondere wenn längere Rohre miteinander verbunden werden müssen. Vor allem in Hydraulikanlagen, wo insoweit hohe Anforderungen gestellt werden, sind solche Schweißringe nicht einsetzbar.

Darüberhinaus sind Geräte bekannt, die über Rollen in Rohrleitungen bewegt werden können und die ein in Segmente aufgeteilten Ring von Tragkörpern aus keramischen oder ähnlichem Material aufweisen, wobei die einzelnen Segmente ausfahrbar sind, um an die Innenwand des jeweiligen Rohrs angelegt werden zu können und dabei eine vorübergehende Unterlage für eine Schweißnaht zu bilden (GB-A-2 249 983). Auch hier wird der segmentartig aufgeteilte Ring nur für den Schweißvorgang selbst verwendet und danach wieder durch Weiterfahren des Gerätes entfernt. Das Gerät hat einen komplizierten Aufbau und eignet sich nur für Rohrleitungen großen Durchmessers. In Hydraulikleitungen ist ein solches Gerät nicht einsetzbar.

Der Erfindung liegt die Aufgabe zugrunde, eine Rohrverbindung und eine dafür geeignete Schweißhülse so zu gestalten, daß die Rohrverbindung einfach herstellbar und ihre Haltbarkeit erheblich verbessert ist.

Diese Aufgabe wird bei der Rohrverbindung nach der eingangs genannten Art dadurch gelöst, daß die Rohrverbindung zwischen den Werkstücken und der Schweißhülse eine zumindest der Schweißnaht gegenüberliegende Trennschicht aus einem vorzugsweise im wesentlichen nichtmetallischen, an der Schweißnaht nicht anhaftenden Material, insbesondere einem Keramik- und/oder Feuerfestmaterial, aufweist.

Überraschenderweise hat sich herausgestellt, daß schon eine relativ dünne Trennschicht aus einem solchen Material - sie kann maximal 1 mm, vorzugsweise sogar maximal nur 0̸,4 mm betragen - ausreicht, um ein Durchbrennen der Schweißnaht bis in die Schweißhülse hinein zu vermeiden, die Schweißnaht also im wesentlichen auf die Stirnseiten der Werkstücke beschränkt bleibt. Es kommt also nicht zu einer Verbindung zwischen Schweißhülse und Werkstücken bzw. Schweißnaht, so daß für die Herstellung der Schweißnaht normales, zu dem Material der Werkstücke passendes Schweißmaterial verwendet werden kann, also auf das Material der Schweißhülse keine Rücksicht genommen werden muß. Da die Schweißnaht auf die Stirnseiten der Werkstücke beschränkt bleibt, ist die Neigung zur Bildung von Rissen, wie sie bei der bekannten Rohrverbindung auftraten, erheblich herabgesetzt, d. h. die Dauerhaltbarkeit der erfindungsgemäßen Rohrverbindung ist wesentlich erhöht worden. Hinzu kommt, daß die Trennschicht wärmeisolierende Eigenschaften hat und auf diese Weise einen Wärmestau verursacht, die die Schweißnaht langsamer abkühlen läßt als bei der vorbekannten Rohrverbindung und auf diese Weise zu einer Qualitätsverbesserung der Schweißnaht führt. Schließlich zeichnet sich die erfindungsgemäße Rohrverbindung durch günstige Spannungsverteilung und damit hohe Festigkeit vor allem unter Wechselbelastung aus.

Die erfindungsgemäße Rohrverbindung ist in an sich bekannter Weise so gestaltet, daß die Schweißhülse formschlüssig innerhalb der Rohrverbindung gehalten ist. Dies kann beispielsweise dadurch geschehen, daß wenigstens eines der Werkstücke zur Schweißnaht hin trichterförmig aufgeweitet und die Schweißhülse dort einen daran angepaßten Konusmantel aufweist. Sofern gewünscht, kann dann eines der Werkstücke auch eine Zylinderaufnahme mit Anschlag für die Schweißhülse aufweisen und die Schweißhülse dort einen Zylindermantel haben. Für die Verbindung von zwei Rohrenden ist es - ebenfalls in an sich bekannter Weise - vorgesehen, beide Werkstücke zur Schweißnaht hin trichterförmig aufzuweiten und die Schweißhülse mit jeweils daran angepaßten Konusmänteln auszubilden. Dabei sollte vorzugsweise der Innendurchmesser der Schweißhülse nicht geringer sein als der des bzw. der Werkstücke in den nicht aufgeweiteten Bereichen, vorzugsweise im wesentlichen gleich sein, damit im Bereich der Schweißnaht keine Einschnürung in Kauf genommen werden muß.

Die Trennschicht sollte vorzugsweise aus einem Material bestehen, das sich mit gängigen Spritzverfahren auf die Außenseite der Schweißhülse auftragen läßt, da hierdurch das Herstellungsverfahren einfach gestaltet und ein gleichmäßiger Auftrag erzielt werden kann. Hierfür hat sich ein Material in der Zusammensetzung mit mindestens 90̸% Al₂O₃, 1 bis 5% TiO₂ und 1 bis 5% SiO₂ bewährt. Die Schweißhülse selbst sollte aus einem passenden metallischen Material bestehen. Sofern hohe Anforderungen bezüglich der Verschmutzungsgefahr bestehen, sollte die Schweißhülse aus Edelstahl, insbesondere nichtrostendem Stahl, hergestellt sein, um die Bildung von Zunder und damit die Notwendigkeit, den Zunder mittels Beizen zu entfernen, erst gar nicht entstehen zu lassen. Außerdem vereinfacht dies Transport und Lagerung solcher Schweißhülsen, weil keine Korrosionsgefahr besteht.

Die Erstreckung der Trennschicht kann sich auf den Bereich der Schweißnaht und hierzu unmittelbar benachbarte Bereiche beschränken, muß sich also nicht bis zu den Enden der Schweißhülse erstrecken. In diesem Fall ist es von besonderem Vorteil, wenn die Trennschicht in die Schweißhülse eingelassen ist, also nicht über die gedachte Kontur des Außenmantels der Schweißhülse vorsteht. Dies kann beispielsweise dadurch erreicht werden, daß zwischen den Enden der Schweißhülse und der Trennschicht jeweils über den Umfang gehende Kanten ausgebildet sind. Die Kanten können von zusätzlich vorstehenden Stegen gebildet sein. Es reicht jedoch aus, wenn die Kanten von den Rändern einer Ringnut gebildet werden, in die die Trennschicht eingelassen ist. Die vorstehenden Maßnahmen haben den Vorzug, daß sich eventuell von der Trennschicht lösende Partikel nach Herstellung der Schweißnaht eingefangen bleiben, also nicht in das Innere der Rohre geraten können. Die vorspringenden Kanten schließen die Trennschicht hiergegen ein. Um insbesondere dann, wenn die Trennschicht in einer Ringnut eingelassen ist, eine scharfe Kantenausbildung zu erreichen, ist es von Vorteil, wenn die Dicke der Trennschicht zu ihren Rändern hin abnimmt.

Die Schweißhülse kann zu den Enden hin je nach vorgesehener Verwendung einen Zylindermantel oder einen Konusmantel haben. Dabei kann die Fläche, auf die die Trennschicht aufgebracht ist, zur Mitte hin parallel zum jeweils benachbarten Mantel verlaufen.

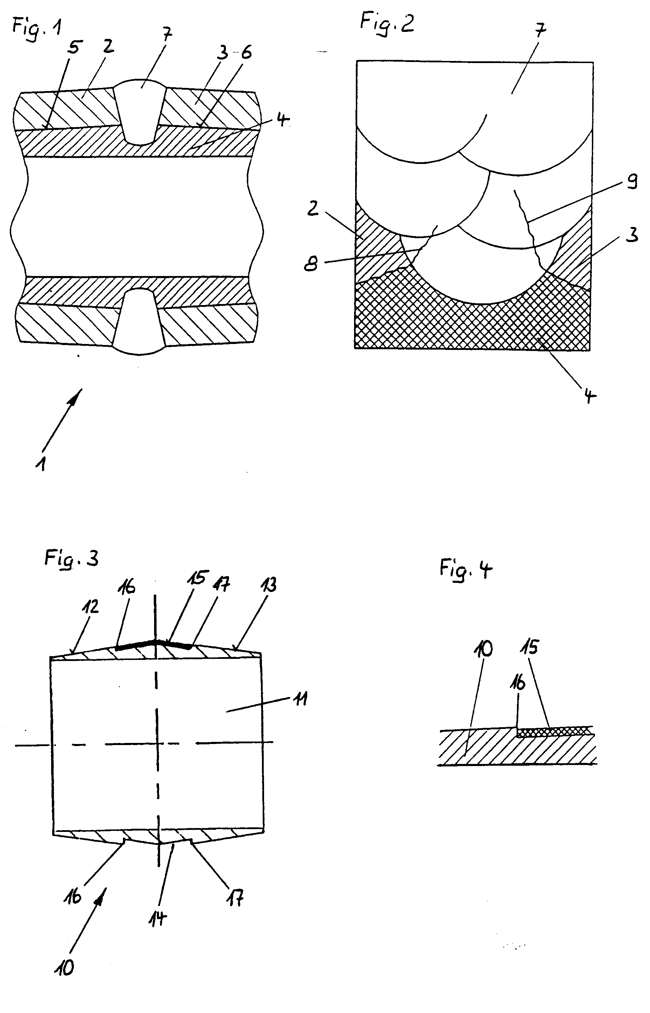

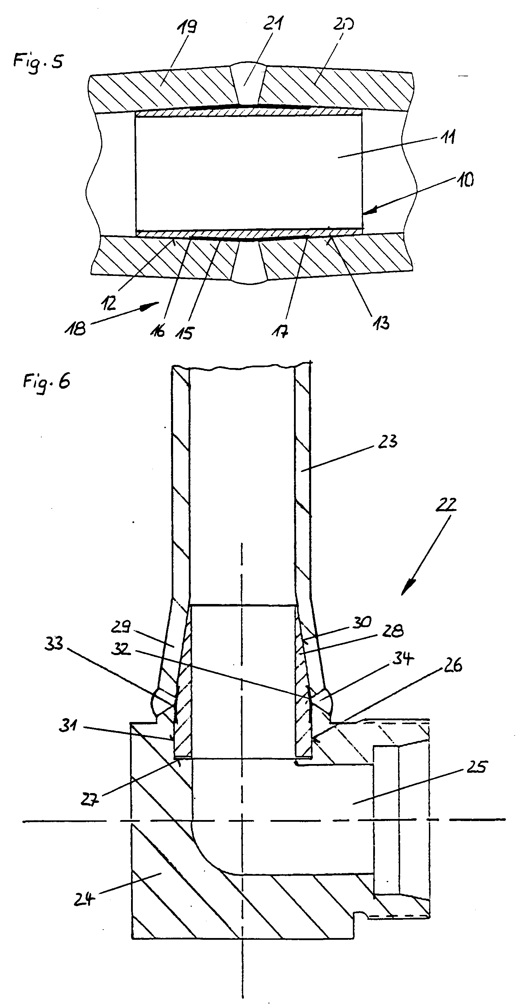

In der Zeichnung ist die Erfindung an Hand von Ausführungsbeispielen näher veranschaulicht. Es zeigen:
- Figur (1): einen teilweisen Längsschnitt durch eine Rohrverbindung nach dem Stand der Technik;
- Figur (2): eine Detailvergrößerung der Rohrverbindung gemäß Figur (1);
- Figur (3): einen Längsschnitt durch eine erfindungsgemäße Schweißhülse;
- Figur (4): eine Teilausschnittvergrößerung der Schweißhülse gemäß Figur (3);
- Figur (5): einen Längsschnitt durch eine erfindungsgemäße Rohrverbindung mit der Schweißhülse gemäß Figur (3) und
- Figur (6): einen Längsschnitt durch eine andere erfindungsgemäße Rohrverbindung.

Figur (1) zeigt die Rohrverbindung (1) gemäß DE-U-87 0̸1 121.2. Die Rohrverbindung (1) besteht im wesentlichen aus zwei jeweils zueinander aufgeweiteten Rohrenden (2, 3) und einer die Rohrenden (2, 3) überbrückenden, innenseitig anliegenden Schweißhülse (4).

Die Schweißhülse (4) hat einen konstanten Innendurchmesser, der - was hier nicht zu sehen ist - im wesentlichen dem Innendurchmesser der sich an die Rohrenden (2, 3) anschließenden, nicht aufgeweiteten Rohrabschnitte entspricht. Der Außenmantel der Schweißhülse (4) ist an den Verlauf der Innenflächen der Rohrenden (2, 3) angepaßt, besteht also aus zwei Konusmänteln (5, 6), die zu den freien Enden der Schweißhülse (4) nach innen hin abfallen.

Die Rohrenden (2, 3) sind über eine V-Schweißnaht (7) miteinander verbunden. Auf Grund der Wärmeentwicklung bei der Herstellung der Schweißnaht (7) ist ein Aufschmelzen der Schweißhülse (4) unvermeidlich, so daß die Schweißnaht (7), wie aus Figur (1) deutlich zu sehen ist, bis tief in die Schweißhülse (4) hineinreicht und so für eine Schweißverbindung der Rohrenden (2, 3) zusammen mit der Schweißhülse (4) sorgt.

Figur (2) zeigt eine Vergrößerung dieses Bereichs der Verschweißung mit den Rohrenden (2, 3), der Schweißhülse (4) und der Schweißnaht (7). Ausgehend von der Grenzfläche zwischen den Rohrenden (2, 3), der Schweißhülse (4) und der Schweißnaht (7) sind Risse (8, 9) eingezeichnet, wie sie typischerweise bei der bekannten Rohrverbindung (1) infolge Materialermüdung auftreten und zu einer Schwächung der Rohrverbindung (1) bis hin zu deren Bruch bei weiterer Belastung führen.

In den Figuren (3) und (4) ist eine erfindungsgemäße Schweißhülse (10̸) dargestellt. Sie hat einen zylindrischen Durchgang (11) und eine aus zwei Konusmänteln (12, 13) gebildete Außenkontur mit der Folge, daß sich die Dicke der Schweißhülse (10̸) zu ihren freien Enden hin verringert.

Im mittleren, im Querschnitt satteldachähnlich ausgebildeten Bereich ist symmetrisch zur Mittelachse eine flache Ringnut (14) eingeformt, wobei der Boden der Ringnut (14) parallel zur gedachten Fortsetzung der Konusmäntel (5, 6) verläuft, also ebenfalls satteldachähnlich ausgebildet ist. In die Ringnut (14) ist eine Trennschicht (15) eingelassen. Zur Verdeutlichung der Formgebung der Ringnut (14) ist die Trennschicht (15) in der unteren Hälfte der Figur (3) weggelassen. Die Trennschicht (15) erstreckt sich bei der fertigen Schweißhülse (10̸) über den gesamten Umfang der Schweißhülse (10̸) und damit auch der Ringnut (14).

Wie die vergrößerte Darstellung gemäß Figur (4) erkennen läßt, ist die Dicke der Trennschicht (15) geringer als die Höhe der Ringnut (14). Die Trennschicht (15) steht also nicht über die gedachte Fortsetzung der Kontur der Außenseite und damit der Konusmäntel (12, 13) der Schweißhülse (10̸) vor. Hierdurch entstehen umlaufende und vorstehende Kanten (16, 17), die die Ringnut (14) begrenzen.

Figur (5) zeigt die Schweißhülse (10̸) innerhalb einer erfindungsgemäßen Rohrverbindung (18), wobei die Schweißhülse (10̸) in dieser Darstellung gestreckter gezeigt ist als in Figur (3). In Analogie zu der Rohrverbindung (1) gemäß Figur (1) stoßen hier ebenfalls aufgeweitete Rohrenden (19, 20̸) aufeinander, wobei jedes Rohrende (19, 20̸) an je einem Konusmantel (12, 13) der Schweißhülse (10̸) anliegt. Die Stirnseiten der Rohrenden (19, 20̸) sind durch eine Schweißnaht (21) verbunden. Dabei ist zu erkennen, daß die Trennschicht (15) - obwohl nur 0̸,4 mm dick - verhindert hat, daß die Schweißnaht (21) bis in das Material der Schweißhülse (10̸) durchgebrochen ist. Es besteht also keine Schweißverbindung der Schweißhülse (10̸) mit den Rohrenden (19, 20̸) und der Schweißnaht (21). Die Schweißhülse (10̸) wird lediglich formschlüssig in der gezeigten Position unter Spannung festgehalten. Die Verschweißung der Rohrenden (19, 20̸) sorgt nämlich auf Grund des Abkühlungsschrumpfes dafür, daß die Rohrenden (19, 20̸) zusammengezogen und hierdurch die Schweißhülse (10̸) fixiert wird.

In Figur (6) ist eine Rohrverbindung (22) dargestellt, bei der ein normales Rohr (23) mit einem Verteilerstück (24) verbunden ist. Das Verteilerstück (24) weist einen rechtwinklig gebogenen Durchgangskanal (25) auf. Am Eingang des Verteilerstückes (24) ist eine zylindrische Ausdrehung (26) mit einem Absatz (27) eingeformt, in die eine Schweißhülse (28) eingesetzt ist. Auf das freie Ende der Schweißhülse (28) ist das Rohr (23) mit seinem aufgeweiteten Rohrende (29) aufgesetzt.

Die Schweißhülse (28) hat hinsichtlich der Ausbildung ihrer Außenkontur im Unterschied zu der Ausführungsform gemäß den Figuren (3) bis (5) nur einen Konusmantel (30̸), auf den das entsprechend aufgeweitete Rohrende (29) aufgeschoben ist. An den Konusmantel (30̸) schließt sich in Richtung auf das Verteilerstück (24) ein Zylindermantel (31) an.

Im Bereich des Übergangs zwischen Konusmantel (30̸) und Zylindermantel (31) weist die Schweißhülse (28) eine Ringnut (32) auf, deren Boden parallel zu den gedachten Fortsetzungen von Konusmantel (30̸) und Zylindermantel (31) verläuft. In die Ringnut (32) ist eine Trennschicht (33) in gleicher Weise wie bei dem Ausführungsbeispiel gemäß den Figuren (3) bis (5) eingelassen. Sie steht also nicht über die gedachten Fortsetzungen von Konusmantel (30̸) und Zylindermantel (31) vor. Die Trennschicht (33) erstreckt sich einerseits in den Bereich der Ausdrehung (26) und andererseits bis in das Rohrende (29) hinein. Die Stirnseiten von Rohrende (29) und Ausdrehung (26) sind über eine umlaufende Schweißnaht (34) verbunden, wobei sich die Schweißnaht (34) auch in diesem Fall wegen des Vorhandenseins der Trennschicht (33) nicht bis in das Material der Schweißhülse (28) erstreckt.

Die erfindungsgemäßen Schweißhülsen (10̸, 28) gemäß den Figuren (3) bis (6) können aus Edelstahl bestehen, so daß das Auftreten von Verzunderungen an der Innenseite der Schweißhülsen (10̸, 28) vermieden wird. Die Trennschicht (15, 33) besteht aus keramischem Material, wobei handelsübliche, aufspritzbare Materialien in Frage kommen. Das keramische Material bildet eine Wärmebarriere und verbindet sich nicht mit dem Schweißmaterial der Schweißnähte (21, 34).

## Patentansprüche

1. Rohrverbindung, bei der einen Durchgangskanal (25) aufweisende Werkstücke (19, 20̸, 24, 29), z. B. Rohre, Rohrkrümmer, Verteilerstücke oder dergleichen, über eine Schweißnaht (21, 34) miteinander verbunden sind, wobei an der Innenseite der Werkstücke (19, 20̸, 24, 29) im Bereich der Schweißnaht (21, 34) eine Schweißhülse (10̸, 28) als fester Bestandteil der Rohrverbindung angebracht ist,
dadurch gekennzeichnet, daß die Rohrverbindung (18, 22) zwischen den Werkstücken (19, 20̸, 24, 29) und der Schweißhülse (10̸, 28) eine zumindest der Schweißnaht (21, 34) gegenüberliegende Trennschicht (15, 33) aus einem an der Schweißnaht (21, 34) nicht anhaftenden Material aufweist.

2. Rohrverbindung nach Anspruch 1,
dadurch gekennzeichnet, daß wenigstens eines der Werkstücke (19, 20̸, 24, 29) zur Schweißnaht (21, 34) hin trichterförmig aufgeweitet und die Schweißhülse (10̸, 28) dort einen daran angepaßten Mantel (12, 13, 30̸) aufweist.

3. Rohrverbindung nach Anspruch 1 oder 2,
dadurch gekennzeichnet, daß eines der Werkstücke (24) eine Zylinderaufnahme (26) für die Schweißhülse (28) aufweist und daß die Schweißhülse (28) dort einen Zylindermantel (31) hat.

4. Rohrverbindung nach einem der Ansprüche 1 bis 3,
dadurch gekennzeichnet, daß der Innendurchmesser der Schweißhülse (10̸, 28) im wesentlichen dem des bzw. der Werkstücke (19, 20̸, 24, 29) in den nicht aufgeweiteten Bereichen entspricht.

5. Rohrverbindung nach einem der Ansprüche 1 bis 4,
dadurch gekennzeichnet, daß die Trennschicht (15, 33) ein Keramik- und/oder Feuerfestmaterial umfaßt.

6. Rohrverbindung nach einem der Ansprüche 1 bis 5,
dadurch gekennzeichnet, daß die Trennschicht (15, 33) aus einem aufspritzbaren Material besteht.

7. Rohrverbindung nach einem der Ansprüche 1 bis 6,
dadurch gekennzeichnet, daß die Trennschicht (15, 33) sich nicht bis zu den Enden der Schweißhülse (10̸, 28), vorzugsweise über deren mittleren Berich, erstreckt.

8. Rohrverbindung nach Anspruch 7,
dadurch gekennzeichnet, daß die Trennschicht (15, 33) vollständig in die Schweißhülse (10̸, 28) eingelassen ist.

9. Rohrverbindung nach einem der Ansprüche 1 bis 8,
dadurch gekennzeichnet, daß zwischen den freien Enden der Schweißhülse (10̸, 28) und der Trennschicht (15, 33) jeweils über den Umfang gehende Kanten (16, 17) ausgebildet sind.

10. Rohrverbindung nach Anspruch 9,
dadurch gekennzeichnet, daß die Kanten (16, 17) von den Rändern einer Ringnut (14, 32) gebildet sind, in die die Trennschicht (15, 33) eingelassen ist.

11. Rohrverbindung nach einem der Ansprüche 1 bis 10,
dadurch gekennzeichnet, daß über den Umfang gehende, radial gegenüber der Kontur des Außenmantels der Schweißhülse vorstehende Kanten vorgesehen sind.

12. Rohrverbindung nach einem der Ansprüche 1 bis 11,
dadurch gekennzeichnet, daß die Trennschicht (15, 33) maximal 1 mm, vorzugsweise 0̸,5 mm dick ist.

13. Schweißhülse für die Verwendung als fester Bestandteil in einer Rohrverbindung (18, 22),
dadurch gekennzeichnet, daß die Schweißhülse (10̸, 28) außenseitig eine Trennschicht (15, 33) aus an Schweißmaterial nicht anhaftendem Material aufweist.

## Claims

1. Pipe connection in which work pieces (19, 20, 24, 29) having a through passage (25), e.g. pipes, pipe bends, manifolds or the like, are connected to one another by a weld seam (21, 34), a welding sleeve (10, 28) being fitted to the inner surface of the work pieces (19, 20, 24, 29) in the region of the weld seam (21,34) as a fixed component of the pipe connection, characterised in that the pipe connection (18, 22) has a separating layer (15, 33) between the work pieces (19, 20, 24, 29) and the welding sleeve (10, 28), at least opposite to the weld seam (21, 34), consisting of a material that is non adherent to the weld seam (21, 34).

2. Pipe connection according to claim 1, characterised in that at least one of the work pieces (19, 20, 24, 29) is enlarged conically towards the weld seam (21, 34), and the welding sleeve (10, 28) at that location has a matching outer surface (12, 13, 30).

3. Pipe connection according to claim 1 or 2, characterised in that one of the work pieces (24) has a cylindrical bore (26) for the welding sleeve (28) and that the welding sleeve (28) at that location has a cylindrical outer surface (31).

4. Pipe connection according to one of claims 1 to 3, characterised in that the internal diameter of the welding sleeve (10, 28) corresponds substantially to that of the work piece(s) (19, 20, 24, 29) in the non enlarged regions.

5. Pipe connection according to one of claims 1 to 4, characterised in that the separating layer (15, 33) comprises a ceramic or refractory material.

6. Pipe connection according to one of claims 1 to 5, characterised in that the separating layer (15, 33) consists of a sprayable material.

7. Pipe connection according to one of claims 1 to 6, characterised in that the separating layer (15, 33) extends, not as far as the ends of the welding sleeve (10, 28), but preferably along its central region.

8. Pipe connection according to claim 7, characterised in that the separating layer (15, 33) is completely set into the welding sleeve (10, 28).

9. Pipe connection according to one of claims 1 to 8, characterised in that between the free ends of the welding sleeve (10, 28) and the separating layer (15, 33), edges (16, 17) are formed extending along the circumference respectively.

10. Pipe connection according to claim 9, characterised in that the edges (16, 17) are formed by the rims of an annular groove (14, 32) into which the separating layer (15, 33) is set.

11. Pipe connection according to one of claims 1 to 10, characterised in that edges are provided extending along the circumference projecting radially with respect to the profile of the outer surface of the welding sleeve.

12. Pipe connection according to one of claims 1 to 11, characterised in that the separating layer (15, 33) is at most 1 mm, preferably 0.5 mm, thick.

13. Welding sleeve for use as a fixed component in a pipe connection (18, 22), characterised in that the welding sleeve (10, 28) has, exteriorly, a separating layer (15, 33) consisting of a material that is non adherent to weld material.

## Revendications

1. Assemblage de tubes, dans lequel des pièces (19, 20, 24, 29) pourvues d'un canal (25) débouchant, par exemple des tubes, des coudes, des éléments de distribution et similaires, sont reliées entre elles au moyen d'un cordon de soudure (21, 34), un manchon de soudage (10, 28) étant placé à l'intérieur des pièces (19, 20, 24, 29), dans la région du cordon de soudure (21, 34), en tant qu'élément faisant partie intégrante de l'assemblage de tubes , caractérisé par le fait que l'assemblage (18, 22) entre les pièces (19, 20, 24, 29) et le manchon de soudage (10, 28) présente une couche de séparation (15, 33) en un matériau qui n'adhère pas au cordon de soudure (21, 34), qui est disposée au moins en vis-à-vis de cordon de soudure (21, 34).

2. Assemblage de tubes selon la revendication 1, caractérisé par le fait qu'au moins une des pièces (19, 20, 24, 29) est évasée en entonnoir en direction du cordon de soudure (21, 34) et que le manchon de soudage (10, 28) présente à cet endroit une surface extérieure (12, 13, 30) adaptée.

3. Assemblage de tubes selon la revendication 1 ou 2, caractérisé par le fait que l'une des pièces (24) présente un logement cylindrique (26) pour le manchon de soudage (28) et que le manchon de soudage (28) est pourvu à cet endroit d'une surface extérieure (31) cylindrique.

4. Assemblage de tubes selon l'une des revendications 1 à 3, caractérisé par le fait que le diamètre intérieur du manchon de soudage (10, 28) correspond sensiblement à celui de la ou des pièces (19, 20, 24, 29) dans les régions non évasées.

5. Assemblage de tubes selon l'une des revendications 1 à 4, caractérisé par le fait que la couche de séparation (15, 33) comprend un matériau céramique et/ou un matériau réfractaire.

6. Assemblage de tubes selon l'une des revendications 1 à 5, caractérisé par le fait que la couche de séparation (15, 33) est formée d'un matériau projeté.

7. Assemblage de tubes selon l'une des revendications 1 à 6, caractérisé par le fait que la couche de séparation (15, 33) ne s'étend pas jusqu'aux extrémités du manchon de soudage (10, 28), mais de préférence dans la région médiane de celui-ci.

8. Assemblage de tubes selon la revendication 7, caractérisé par le fait que la couche de séparation (15, 33) est entièrement logée dans le manchon de soudage (10, 28).

9. Assemblage de tubes selon l'une des revendications 1 à 8, caractérisé par le fait que des arêtes (16, 17) qui s'étendent sur la circonférence sont aménagées entre les extrémités libres du manchon de soudage (10, 28) et la couche de séparation (15, 33).

10. Assemblage de tubes selon la revendication 9, caractérisé par le fait que les arêtes (16, 17) sont formées par les bords d'une gorge annulaire (14, 32) dans laquelle est logée la couche de séparation (15, 33).

11. Assemblage de tubes selon l'une des revendications 1 à 10, caractérisé par le fait qu'il est prévu des arêtes qui sont radialement saillantes par rapport à la surface extérieure du manchon de soudage et s'étendent sur la circonférence de celui-ci.

12. Assemblage de tubes selon l'une des revendications 1 à 11, caractérisé par le fait que l'épaisseur de la couche de séparation (15, 33) est de 1 mm maximum, de préférence de 0,5 mm.

13. Manchon de soudage destiné à être utilisé comme élément faisant partie intégrante d'un assemblage de tubes (18, 22), caractérisé par le fait que le manchon de soudage (10, 28) est pourvu extérieurement d'une couche de séparation (15, 33) en un matériau qui n'adhère pas au matériau de la soudure.
